# EUROPEAN PATENT SPECIFICATION

(11) **EP 4 149 202 B1**
(45) Date of publication and mention of the grant of the patent: **12.02.2025**
(21) Application number: 21195677.6
(22) Date of filing: 09.09.2021
(51) Int. Cl.: H04W 76/14, H04W 72/56, H04W 72/23, H04W 72/40, H04W 88/04

(54) **MANAGEMENT OF SIDELINK BASED RELAYING**
VERWALTUNG VON SIDELINK-BASIERTER WEITERLEITUNG
GESTION DE RELAIS À BASE DE LIAISON LATÉRALE

(43) Date of publication of application: 15.03.2023
(73) Proprietor: Nokia Technologies Oy, 02610 Espoo (FI)
(72) Inventor: JI, Lianghai, 9220 Aalborg (DK); SABOURI-SICHANI, Faranaz, 9220 Aalborg (DK); YU, Ling, 02700 Kauniainen (FI); VAN PHAN, Vinh, 90100 Oulu (FI); BUTHLER, Jakob Lindbjerg, 9000 Aalborg (DK); WOLFNER, György Tamás, 1163 Budapest (HU)
(74) Representative: Nokia EPO representatives

(56) References cited:
- "3rd Generation Partnership Project; Technical Specification Group Radio Access Network; Evolved Universal Terrestrial Radio Access (E-UTRA); Radio Resource Control (RRC); Protocol specification (Release 16)", 6 July 2021 (2021-07-06), XP052030854, Retrieved from the Internet <URL:https://ftp.3gpp.org/tsg_ran/WG2_RL2/Specifications/202106_final_specs_after_RAN_92/36331-g50.docx> [retrieved on 20210706]

## Description

### TECHNICAL FIELD

The present invention relates to management of sidelink based relaying.

### BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

3GPP has been developing standards for sidelink (SL) as a tool for direct communication between user equipment (UE to UE communication) in various use cases. In some use cases solutions including new radio (NR) sidelink are being specified mainly for vehicle-to-everything (V2X) while they can also be used for public safety when the service requirement can be met.

Some commercial use cases related to NR sidelink are, for example, network controlled interactive service (NCIS), gap analysis for railways, enhanced relays for energy efficiency and extensive coverage (REFEC), audio-visual service production (AVPROD).

The document 3GPP TS 36.331 V16.5.0 discloses some procedures and messages specified for the UE which equally apply to the RN for functionality necessary for the RN. There are also (parts of) procedures and messages which are only applicable to the RN in its communication with the E-UTRAN, in which case the specification denotes the RN instead of the UE. Such RN-specific aspects are not applicable to the UE. This specification covers MR-DC i.e. the case in which the UE is configured with resources belonging to another node using NR RAT.

### SUMMARY

There is provided a method and apparatus for managing sidelink based relaying i.e. utilizing a relaying device in communication between two other devices, for example between a remote user equipment (UE) and a network node or between two remote user equipment so that data is communicated via the relaying device (e.g. a relay user equipment).

The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to some aspects, there is provided the subject matter of the independent claims. Some further aspects are defined in the dependent claims. The embodiments that do not fall under the scope of the claims are to be interpreted as examples useful for understanding the disclosure.

In some embodiments a remote user equipment prioritizes certain candidate relay user equipment based on the resource pool (RP), for example, from which discovery message transmitted by candidate relay user equipment have been received. The remote UE could prioritize e.g. the candidate relay UEs which are in RRC_Connected state and/or in a certain cell and in a certain wireless communication network PLMN (Public Land Mobile Network). The remote UE could then send information of the prioritized candidate relay UEs to the network (NW). This information is, for example, a measurement report regarding the signals received and measured by the remote UE from the candidate relay UEs. In some embodiments the report contains measurement reports of prioritized relay UEs and in some other embodiments the report may also contain measurement reports of non-prioritized relay UEs. In other words, the prioritization is performed at the remote UE based on the resource pools (RPs), from which the discovery messages of the candidate relay UEs are received. Thus, no additional information regarding to e.g. RRC states etc. is needed to be carried in the discovery message. The solution can be summarized below:
- The remote UE determines a priority list of resource pools (RPs) to facilitate the selection of prioritized candidate relay UEs based on received discovery messages.
- In one embodiment, the remote UE may determine the list of prioritized RPs based on its own sidelink resource pool (SL RP) configuration. The remote UE may consider at least one of its sidelink transmission resource pools (SL TX RPs) as high priority resource pools.
- In another embodiment the remote UE may be configured with the list, e.g. by the network or by a pre-configuration.
- The remote UE monitors and receives the discovery messages transmitted by nearby candidate relay UEs. For example, the remote UE may monitor discovery messages from all configured SL RX RPs including the determined prioritized RPs or the remote UE may prioritize to monitor discovery messages only from the determined prioritized RPs.
- The remote UE selects the prioritized candidate relay UE(s), whose discovery messages is/are received from the prioritized RPs.
- The remote UE reports the selected prioritized candidate relay UE(s) to the network.
- In one embodiment, the remote UE first reports the prioritized candidate relays before reporting the other non-prioritized candidate relay UEs.
- In one embodiment, the remote UE may only report the prioritized candidate relay UEs.
- Additionally or alternatively, the remote UE may use a tag to differentiate the prioritized candidate relay UEs from the other discovered non-prioritized candidate relay UEs.
- Additionally or alternatively, the remote UE may add a priority value for the candidate relay UEs reported to the NW.

The invention is set out in the appended set of claims.

### BRIEF DESCRIPTION OF THE DRAWINGS

For a more complete understanding of example embodiments of the present invention, reference is now made to the following descriptions taken in connection with the accompanying drawings in which:
Fig. 1 shows a part of an exemplifying wireless communications access network in accordance with at least some embodiments of the present invention;
Fig. 2 illustrates an example of a communication configuration in which some embodiments may be implemented;
Fig. 3 depicts a signaling diagram of a procedure for a remote UE switching from a direct path to indirect path via a relay UE, in accordance with an approach;
Fig. 4 depicts a signaling diagram of a method, in accordance with an embodiment;
Fig. 5 depicts a flow diagram of a method, in accordance with the claimed invention; and
Fig. 6 illustrates an apparatus in accordance with an embodiment.

### DETAILED DESCRIPTON OF SOME EXAMPLE EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

A radio device may be a device configured for communications on radio waves over a wireless radio link, i.e. a wireless link. The communications may comprise user traffic and/or signaling. The user traffic may comprise data, voice, video and/or audio. Examples of the wireless link comprise a point-to-point wireless link and a point-to-multipoint wireless link. The wireless link may be provided between two radio devices. It should be appreciated that the radio devices may have differences. For example, radio devices connected by a wireless link may comprise one or more of a user equipment (UE), an access node, an access point, a relay node, a user terminal and an Internet of Things (IoT) device.

A radio device may be a radio access device that is configured to serve a plurality of other radio devices, user radio devices, and give radio access to a communications system for the user radio devices. A radio device may also be a radio station serving as a relay node or providing a wireless backhaul for one or more radio access nodes. Examples of the radio access devices comprise at least an access node, an access point, a base station and an (e/g)NodeB. Examples of the user radio devices comprise at least a user terminal and user equipment (UE). The radio device may be an aerial radio device and/or an extraterrestrial radio device configured to operate above the ground without a fixed installation to a specific altitude. Examples of extraterrestrial radio devices comprise at least satellites and spacecraft that are configured for radio communications in a communications system that may comprise both terrestrial and extraterrestrial radio devices. Examples of aerial radio devices comprise at least High Altitude Platform Stations (HAPSs) and unmanned aerial vehicles (UAVs), such as drones. The radio access device may have one or more cells which the user radio devices may connect to in order to access the services of the communications system via the radio access device. The cells may comprise different sizes of cells, for example macro cells, micro cells, pico cells and femto cells. A macro cell may be a cell that is configured to provide coverage over a large coverage area in a service area of the communications system, for example in rural areas or along highways. A micro cell may be a cell that is configured to provide coverage over a smaller coverage area than the macro cell, for example in a densely populated urban area. Pico cells may be cells that are configured to provide coverage over a smaller area than the micro cells, for example in a large office, a mall or a train station. Femto cells may be cells that are configured to provide coverage over a smaller area than the femto cells, for example at homes or small offices. For example, macro cells provide coverage for user radio devices passing a city on a motorway/highway and local cells, e.g. micro cells or smaller cells, provide coverage for user radio devices within the city. In another example, macro cells provide coverage for aerial radio devices and/or extraterrestrial radio devices and local cells, e.g. micro cells or smaller cells, provide coverage for the aerial radio devices and/or extraterrestrial radio devices that are located at elevated positions with respect to one or more radio access devices of the communications system. Accordingly, an aerial radio device or extraterrestrial radio device may be connected to a micro cell of a radio access device and when the aerial radio device or extraterrestrial radio device is above a certain height from the ground, the aerial radio device or extraterrestrial radio device may be switched to a macro cell, for example by a handover procedure.

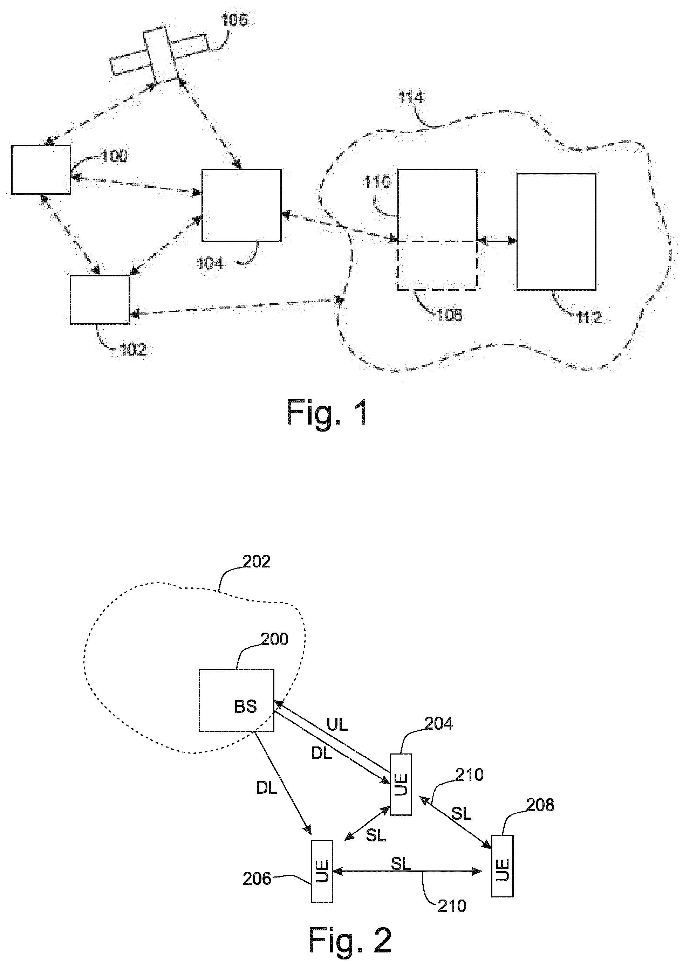

Fig. 1 depicts examples of simplified system architectures only showing some elements and functional entities, all being logical units, whose implementation may differ from what is shown. The connections shown in Fig. 1 are logical connections; the actual physical connections may be different. It is apparent to a person skilled in the art that the system typically comprises also other functions and structures than those shown in Fig. 1.

The example of Fig. 1 shows a part of an exemplifying radio access network.

Fig. 1 shows user devices 100 and 102 configured to be in a wireless connection on one or more communication channels in a cell with an access node (such as (e/g)NodeB) 104 providing the cell. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage. The access node provides access by way of communications of radio frequency (RF) signals and may be referred to a radio access node. It should be appreciated that the radio access network may comprise more than one access nodes, whereby a handover of a wireless connection of the user device from one cell of one access node, e.g. a source cell of a source access node, to another cell of another node, e.g. a target cell of a target access node, may be performed.

A communication system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

The user device (also called UE, user equipment, user terminal, terminal device, wireless device, communications device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. The user device may also utilize cloud. In some applications, a user device may comprise a small portable device with radio parts (such as a watch, earphones or eyeglasses) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being capable of being integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Fig. 1 by "cloud" 114). The communication system may also comprise a central control entity, an operations and maintenance manager, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or NodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 106 in the mega-constellation may cover several satellite-enabled network entities that create on-ground cells. The on-ground cells may be created through an on-ground relay node 104 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)NodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)NodeBs), a home node B gateway, or HNB-GW (not shown in Fig. 1). A HNB Gateway (HNB-GW), which is typically installed within an operator's network may aggregate traffic from a large number of HNBs back to a core network.

The embodiments are not, however, restricted to the system given as an example but a person skilled in the art may apply the solution to other communication systems provided with necessary properties.

The nature of the sidelink (SL) is oriented according to a transmitting user equipment (Tx UE) wherein a receiving user equipment (Rx UE) may need to keep monitoring all possible PSCCH (Physical Sidelink Control Channel) instances to receive sidelink transmission over one or more (pre-)configured resource pool(s) (RP). There are at least the following two allocation modes for sidelink transmissions. The first mode, Mode 1, is a base station (BS) scheduled mode in which the serving base station allocates resources for the user equipment for sidelink transmission, and the second mode, Mode 2, is an autonomous UE selected mode, in which the user equipment may select resources for the sidelink transmission without base station intervention. These modes make no difference to a receiving user equipment Rx UE in term of receiving sidelink, regardless of whether the sidelink is for broadcast, groupcast or unicast. The sidelink can be applied for both in-coverage and out-of-coverage situations with multi-PLMN support (Tx UE and Rx UE from different serving PLMNs).

In public safety or road safety use cases, sidelink communication is often used for groupcast or broadcast in connectionless manner. Hence, a receiving user device (Rx UE) may need to listen to various transmitting user devices (Tx UEs) in proximity without knowing in advance which transmitting user devices may be present in proximity. Thus, possible discontinuous reception (DRX) operation for the receiving user device needs to cope with various and random transmitting user devices present in proximity.

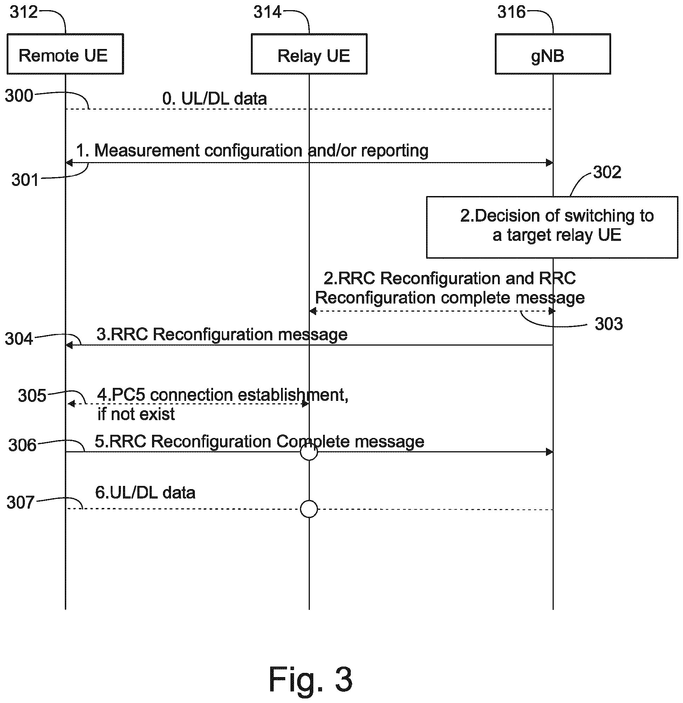

In the following, switching from a direct path to an indirect path communication according to an example of the disclosure will be explained with reference to Fig. 3. In this example, a remote UE 312 is first communicating directly (i.e. via the direct path) with a base station 316 (e.g. the gNB) of a communication network. This is illustrated with the dotted line 300 in Fig. 3. The remote UE 312 has been configured e.g. by the base station 316 to discover and measure signals transmitted by candidate relay UEs, for example the relay UE 314 of Fig. 3 and possibly other relay UEs in the proximity. The remote UE 312 sends one or more reports to the base station 316 regarding the measured candidate relay UEs. The report may comprise information of received signal strength such as SL-RSRP (Sidelink reference signal received power) and/or other signal strength and/or quality related value. This is illustrated with the arrow 301.

The base station 316 may examine the receive report(s) and determine that the indirect path communication should be initiated for the remote UE 312. Thus, the base station 316 may decide which candidate relay UE would be selected for the indirect path communication as a target relay UE (block 302 in Fig. 3). The decision of switching and corresponding configuration to the target relay UE 314 may be communicated by the base station 316 to the target relay UE 314 (arrow 303).

The base station 316 also sends the decision of switching and corresponding configuration as a reconfiguration message such as a radio resource control reconfiguration (RRC Reconfiguration) message to the remote UE 312 (arrow 304). The reconfiguration message may comprise, for example, the following information: 1) Identity of the target relay UE; 2) Target Uu and PC5 configuration.

After receiving the reconfiguration message and examining the contents the remote UE 312 establishes a PC5 connection with the target relay UE 314 (arrow 305), if the connection has not been setup yet.

The remote UE 312 sends feedback to the base station 316 on the setup of the target indirect path by sending, for example, a RRCReconfigurationComplete message to the base station 316 using the target indirect path i.e. via the relay UE 314, using a target configuration provided in RRCReconfiguration message by the base station 316 (arrow 306).

The data path is then switched to the indirect path for communicating data between the remote UE 312 and the base station 316 via relay UE 314 (arrow 307).

According to an approach, a user equipment UE may use one of two modes to transmit via the sidelink: either mode 1 or mode 2.

In the mode 1 the network (NW) (e.g. the base station 316) allocates a sidelink transmission resource (SL TX resource) to the transmitting user equipment for transmission. Thus, mode 1 requires that the transmitting user equipment (SL TX UE) is in a RRC_Connected state for obtaining the NW scheduling.

In the mode 2 the transmitting user equipment selects its sidelink transmission resource from a sidelink transmission resource pool (SL TX RP) autonomously.

A SL TX RP is a pool of resources from which the transmitting UE can select or be allocated a sidelink resource for its sidelink transmission. Correspondingly, a receiving user equipment (RX UE) is also configured with sidelink reception pool (SL RX RP) to monitor and receive from a peer SL TX UE.

It is noted that different transmitting UEs may be configured with different sidelink transmission resource pools. Thus, sidelink reception pools configured for a receiving UE for receiving may contain one or more of the configured sidelink transmission resource pools in order to receive from another transmitting UE over the same configured sidelink transmission resource pool(s). In addition, sidelink reception pools configured for a receiving UE may further contain additional resource pools than its configured sidelink transmission pool(s) to avoid missing a SL reception from a peer SL UE, whose configured sidelink transmission pools are different from the sidelink reception pools of the receiving UE. Table 1 shows an example of the configured resource pools at a user equipment utilizing the sidelink communication, shortly SL UE in the table. In this example, the SL UE is configured with RPs #1 and #2 as the sidelink transmission resource pools SL TX RPs while all the RPs #1, #2, #3, #4, and #5 are configured as the sidelink reception resource pools SL RX RPs. In this case, if another SL UE is configured with different SL TX RPs, e.g. due to different RRC states or different PLMNs, the considered SL UE can still receive from the other SL UE.

**Table 1 An example of the configured SL RPs at a SL UE**

| RP index | TX RP | RX RP |
|---|---|---|
| 1 | 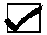 | 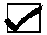 |
| 2 | 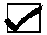 | 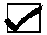 |
| 3 | | 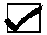 |
| 4 | | 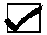 |
| 5 | | 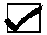 |

In the procedure according to an approach for a remote UE switching to indirect relay UE, the remote UE would need to report the discovered candidate relay UEs to the serving gNB, e.g. as shown in step 301 in Fig. 3. Afterwards, based on the received report from the remote UE, the serving gNB may decide to switch the remote UE to a particular relay UE among the discovered candidate relay UEs.

The relay discovery procedure is not shown in Fig. 3. According to an approach, two discovery models may be utilized: a discovery model A and a discovery model.
- In the discovery model A, one or more candidate relay UEs send one or more announcement messages and the remote UE monitors the announcement message(s).
- In the discovery model B, the remote UE sends a solicitation message, and one or more candidate relay UEs send back a response message to the remote UE after receiving the solicitation message.

If there are no UEs in the nearby the remote UE which could serve as a candidate relay UE, the remote UE might not receive any announcement messages (in the discovery model A) or any response messages (in the discovery model B). However In the following it is assumed that there is at least one UE which could be selected as a candidate relay UE and which sends the response message to the remote UE.

It is noted that in the discovery procedure, the remote UE may discover many candidate relay UEs, which fulfil an access stratum (AS) layer and/or upper layer criteria for being a relay. This might introduce significant signaling overhead, hence, in order to save signaling effort, optimization may be needed to allow the remote UE to prioritize and report at least one, but not all of candidate relay UEs to the serving gNB in step 301. In addition, reporting many candidate relay UEs to NW may introduce more effort at the NW to select the best relay UE.

In accordance with an approach, the SL reference signal received power (SL-RSRP) measured at the remote UE is considered as an AS layer criterion in relay (re)selection. It may happen that many candidate relay UEs fulfilling the configured SL-RSRP threshold may be discovered.

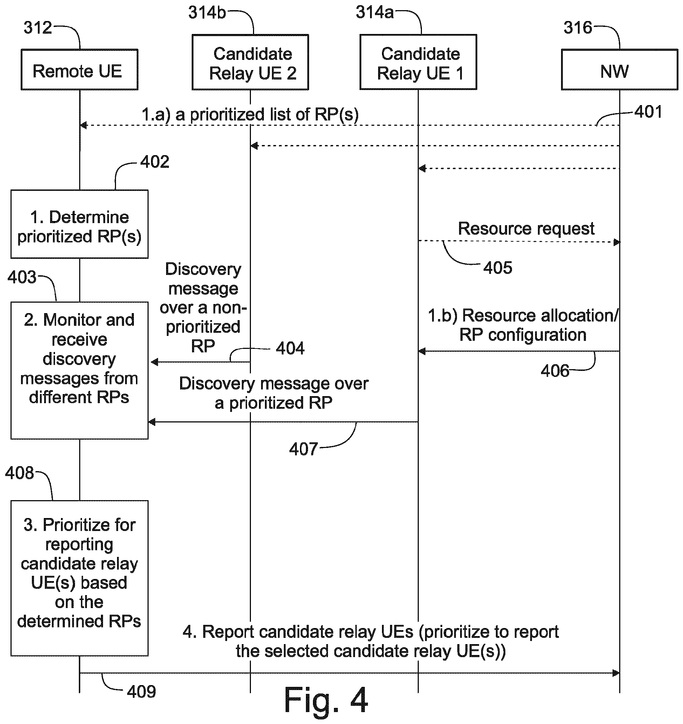

In the following, some details of how the amount of information during the reporting of the candidate relay UEs could be reduced will be described with reference to the signaling flowchart of Fig. 4, in accordance with an embodiment of the disclosure. For simplicity, only two candidate relay UEs are shown in the figure. The procedure of Fig. 4 is used for the remote UE 312 to determine and report a set of prioritized candidate relay UEs 314 to the network, e.g. to the base station 316, in the step 301 of Fig. 3.

The remote UE 312 obtains a list of configured sidelink reception resource pools SL RX RPs and a list of configured sidelink transmission resource pools SL TX RPs. These lists may have been received 401 from the network and/or pre-configured in the remote UE 312.

When the remote UE 312 has obtained the list of configured sidelink reception resource pools and possibly also the list of configured sidelink transmission resource pools SL TX RPs, the remote UE 312 tries to determine 402 a priority list of resource pools (RPs) from all the configured SL RX RPs. The determined prioritized RPs will then be used by the remote UE 312 to prioritize the candidate relay UEs for reporting to the network based on certain criteria.

In one embodiment, the remote UE 312 may determine the prioritized RPs based on its own SL TX RPs configured by the network via e.g. dedicated RRC signaling and/or system information block (SIB).

In one example, the remote UE 312 may determine 402 sidelink transmission resource pools as follows. The remote UE receives an information element (IE) called as sl-TxPoolScheduling information element via dedicated RRC signaling, e.g. if the remote UE is in RRC_Connected state. This information element contains information of the mode 1 TX RPs dedicatedly configured to the remote UE 312. As was already mentioned, the first mode, Mode 1, is a base station (BS) scheduled mode in which the serving base station allocates resources for the user equipment for sidelink transmission, and the second mode, Mode 2, is an autonomous UE selected mode, in which the user equipment may allocate resources for the sidelink transmission without base station intervention.

In one embodiment, after determining the prioritized RPs, the remote UE 312 may start to monitor and receive 403 discovery messages from different resource pools.

The mode 1 TX RPs can be regarded by the remote UE 312 as the high priority resource pools. In this case, since the mode 1 TX RPs are not shared with any mode 2 TX UEs, a candidate relay UE transmitting a discovery message in the determined mode 1 TX RPs is in RRC_Connected state. E.g. the candidate relay UE 1 (marked with the reference number 314a in Fig. 4) transmits its discovery message (arrow 407 in Fig. 4) in one of the remote UE's mode 1 TX RPs. Thus, since mode 1 can only be applied by a user equipment able to communicate via sidelink(s) (SL UE) which is in the RRC_Connected state, the candidate relay UE 1 314a that transmits its discovery message in one of the remote UE's mode 1 Tx RPs should be in RRC_Connected state.

In one example, the remote UE 312 receives an information element (IE) called as sl-TxPoolSelectedNormal via dedicated RRC signaling and/or in a system information block (SIB), e.g. if the remote UE is in RRC_Connected state. This information element or SIB contains information of the mode 2 TX RPs dedicatedly configured to the remote UE 312. The remote UE may then consider its mode 2 TX RPs contained in the IE/SIB as the high priority RPs.

In one embodiment, the network NW or the base station gNB of the network may further ensure that its configured mode 2 TX RPs to the remote UE do not overlap with the TX RPs configured by other, possibly neighbouring, wireless communication networks (PLMNs) and/or base stations gNBs. This may be performed, e.g., by exchanging/negotiating the information of the configured mode 2 TX RPs or by regulation/license agreement for (spectrum) resource usage. Thus, only the candidate relay UEs in the same PLMN/gNB will use the same mode 2 TX RPs for sending discovery messages. For example, if candidate relay UE 1 in Fig. 4 is from the same PLMN/cell as the remote UE but the candidate relay UE 2 (marked with the reference number 314b in Fig. 4) is not, the candidate relay UE 1 may be configured with the same mode 2 TX RPs as the remote UE for transmitting SL including the discovery message, according to an embodiment. In this case, comparing to the candidate relay UE 2, the candidate relay UE 1 will be prioritized by the remote UE.

The remote UE 312 may also receive discovery message(s) over one or more non-prioritized resource pools (an example is illustrated with the arrow 404 in Fig. 4).

In one embodiment, the remote UE may consider its configured exceptional TX RPs received from dedicated RRC signaling and/or SIB as the deprioritized RPs, and the remote UE may deprioritize to report the candidate relay UEs, whose discovery messages are received from the exceptional TX RPs, since a relay UE may only use the exceptional TX RP in certain exceptional conditions that may have negative impacts on performing SL relay, e.g. during RRC reestablishment procedure, during handover procedure, etc. In this case, the remote UE excludes the RPs contained in IE sl-TxPoolExceptional received from dedicated RRC signaling and/or SIB from the list of prioritized RPs. Alternatively, the remote UE may consider the RPs contained in IE sl-TxPoolExceptional as deprioritized RPs comparing to other configured RPs.

In one embodiment, the remote UE may be configured with a list of prioritized RP(s), e.g. by NW or pre-configuration.

The configuration may be indicated to the remote UE 312 in a system information block SIB and/or by dedicated RRC signaling by the network, e.g. as shown in step 301 in Fig. 3.

In one embodiment, the configuration may also be provided to one or more other UEs including a candidate relay UE 314a, 314b, e.g. via SIB. In one option, a candidate relay UE may have or may be configured to have the flexibility to determine whether it transmits the discovery message in a prioritized RP or not, e.g. based on its local condition. In another option, a candidate relay UE may be configured by the network, e.g. after the candidate relay UE 314 have requested resources from the network (arrow 405 in Fig. 4), to transmit the discovery message in a prioritized RP, e.g. the candidate relay UE 1 in step 406 in Fig. 4.

In one embodiment, the configured prioritized RPs may be the mode 1 TX RPs, which implies a candidate relay UE transmitting the discovery messages in a prioritized RP is in RRC_Connected state. It should be noted that the configured priority list may include more mode 1 RPs than the configured mode 1 TX RPs that can be used by the remote UE to perform its own mode 1 sidelink transmissions. In one example, if a sidelink relay operation between different wireless communication networks (inter-PLMN SL) is supported, the configured prioritized RPs may contain the mode 1 RPs from different PLMNs.

In one embodiment, the configured prioritized RPs may be TX RPs used by the relay UEs in the same PLMN/cell to transmit discovery messages. In this case, a candidate relay UE transmitting the discovery messages in a prioritized RP is in the same PLMN/cell as the remote UE.

In one embodiment, the serving base station 316 of the remote UE 312 may exchange/negotiate with a neighbouring base station to obtain/derive the prioritized RPs.

In one embodiment, the serving base station and the neighbouring base station may decide to use different TX RPs for sending discovery messages. Thus, if the serving base station gNB 316 of the remote UE 312 configures its SL TX RPs as the prioritized RPs for the remote UE, this approach may ensure that the relay candidates transmitting discovery messages in the prioritized RPs are from the same cell as the remote UE.

In another embodiment, the prioritized RPs may be the TX RPs, which are/will be used by the (RRC_Connected) relay UEs served by the neighbouring gNB for transmitting the discovery message. As one example, if the serving base station gNB 316 of the remote UE 312 is highly loaded, this embodiment enables the network to control the remote UE 312 to prioritize to report a candidate relay UE in a neighbouring cell, wherein the neighbouring cell has lower traffic load than the serving network. Thus, the serving base station gNB 316 can command the remote UE 312 to switch to a relay UE served by that neighbouring cell for traffic offloading purpose in a next step, e.g. in the step 404 in Fig. 3.

After the negotiation, the neighbouring base station may schedule/configure a serving candidate relay to perform sidelink transmission in the negotiated RPs, e.g. as shown in step 406 in Fig. 4. The resource configuration/allocation may be provided to the serving candidate relay UE via a dedicate signaling or SIB, for example.

The remote UE 312 may discover nearby candidate relay UEs by receiving discovery messages transmitted by the nearby candidate relay UEs (e.g. the discovery response message in discover model B, or the discovery announcement message in discovery model A).

If the remote UE 312 receives discovery messages from multiple configured SL RX RPs, the remote UE 312 may store the resource pool information regarding from which (prioritized) resource pool the discovery message of a candidate relay UE is received.

The remote UE 312 may prioritize to receive discovery messages from the prioritized resource pools. In this case, as one example, reception of discovery messages from (part of) the rest of the configured sidelink reception resource pools may be triggered if the number of discovered candidate relay UEs from the prioritized RPs is lower than the configured threshold.

The remote UE 312 may determine the prioritized candidate relay UEs based on the determined list of prioritized resource pools and the resource pool over which the discovery message of a candidate relay UE is received. In one example, if the prioritized resource pools contain SL RX RP #1 and SL RX RP #2, then the candidate relay UEs, whose discovery messages are received by the remote UE 312 from the SL RX RP #1 and the SL RX RP #2, are determined as the prioritized candidate relay UEs. It should be noted that the remote UE 312 may also consider other criteria to determine which candidate relay UEs could be selected as the prioritized candidate relay UEs than what has been described above.

In one example, besides the determined list of prioritized resource pools and the resource pool over which the discovery message of a candidate relay UE is received, the remote UE 312 may be configured with a function or rule to further consider the measured signal strengths (SL-RSRPs) of the received discovery messages from the candidate relay UEs. For example, among the candidate relay UEs, whose discovery messages are received over prioritized resource pools, the relay UE may further prioritize the candidate relay UEs, whose discovery messages are received with higher SL-RSRPs. If a candidate relay UE's discovery message is received over a prioritized RP but with a much lower SL-RSRP (e.g. lower than a configured threshold value) comparing to another candidate relay UE's discovery message over a non-prioritized RP, the remote UE may still prioritize the candidate relay UE whose discovery message is received with a much higher SL-RSRP, though that candidate relay UE may transmit the discovery message in a non-prioritized RP.

In an embodiment, a different SL-RSRP threshold may be configured for selecting a candidate relay UE transmitting discovery message over prioritized RPs, wherein the configured SL-RSRP threshold is lower than the SL-RSRP threshold used for selecting a candidate relay UE transmitting discovery message over the non-prioritized RPs.

When the remote UE 312 has collected information of candidate relay UEs, the remote UE 312 selects 408 the prioritized candidate relay UEs based on the determined resource pools. The remote UE 312 may form a list of prioritized candidate relay UEs and possible also a list of non-prioritized candidate relay UEs. The remote UE 312 reports 409 the prioritized candidate relay UEs to the network.

In accordance with an embodiment, the remote UE 312 first reports the prioritized candidate relays before reporting the other non-prioritized candidate relay UEs.

In accordance with another embodiment, the remote UE 312 may only report the prioritized candidate relays.

In accordance with an embodiment, there may be multiple levels of the prioritized resource pools determined by the remote UE 312. As one example, a first level prioritized resource pools may contain the transmission resource pools used for RRC_Connected relays in the same or in a certain wireless network and/or in the same or in a certain cell, while a second level prioritized resource pools may contain the transmission resource pools used by the candidate relay UEs, which are in the same wireless network/in the same cell but may not be in RRC_Connected state. In this case, the remote UE 312 may determine to report at first the candidate relays, whose discovery messages are received from the first level prioritized resource pools, and then the candidate relays, whose discovery messages are received from the second level prioritized resource pools, and at last the other candidate relays, if any, whose discovery messages are received from the rest of the resource pools.

In some embodiments the remote UE uses a tag to differentiate the prioritized candidate relay UEs from the other discovered non-prioritized candidate relay UEs.

In some embodiments the remote UE 312 adds, instead of the tag, a priority value for the candidate relay UEs reported to the NW.

In some embodiments the remote UE 312 uses the tag and attaches the priority value with the tag and reports the discovered candidate relays with different tags indicating the corresponding priority level.

In one embodiment, the multiple levels of the prioritized resource pools may be determined by the remote UE 312 based on its own configured SL TX RPs, NW configuration, and/or pre-configuration, as described before.

In one embodiment, the rest of the resource pools may be considered as the level of the prioritized RP with the lowest priority.

In one embodiment, the remote UE may be configured to activate/de-activate monitoring of all configured resource pools or only prioritized resource pools based on an estimated/detected number of candidate relay UEs in the proximity of the remote UE 312, e.g. based on historical information related with (previous) relay discovery procedure and stored in the remote UE 312.

In one embodiment, the decision of the prioritized resource pools may depend on further aspects, e.g. a release tag indicated in the resource pool configuration and/or the configuration of advanced features or the lack of configuration of advanced features like the support for Sidelink DRX. In one example, the remote UE 312 may determine a resource pool with a tag indicating a later release as a prioritized resource pool comparing to a resource pool from early release.

If the network configures the list of prioritized resource pools, e.g. via a SIB and/or dedicate signaling, the prioritized resource pools may be configured in a form of prioritized reception resource pools or in a form of prioritized transmission resource pools. In case of prioritized reception resource pools, a candidate relay UE 314 may determine to transmit the discovery message over a prioritized reception resource pool, if the prioritized reception resource pool is included in its transmission resource pool configuration, by considering the candidate relay UE's own condition, e.g. the RRC state. In case of prioritized transmission resource pools, a candidate relay UE 314 may determine to transmit the discovery message over a prioritized transmission resource pool, and the remote UE 312 may consider the prioritized transmission resource pools as the reception resource pools to prioritize the candidate relay UEs 314, whose discovery messages are received from those transmission resource pools.

When the remote UE 312 has determined the prioritized candidate resource pool(s) and the network 316 has received the report from the remote UE 312, the network 316 selects the relay UE among the reported candidate relay UEs.

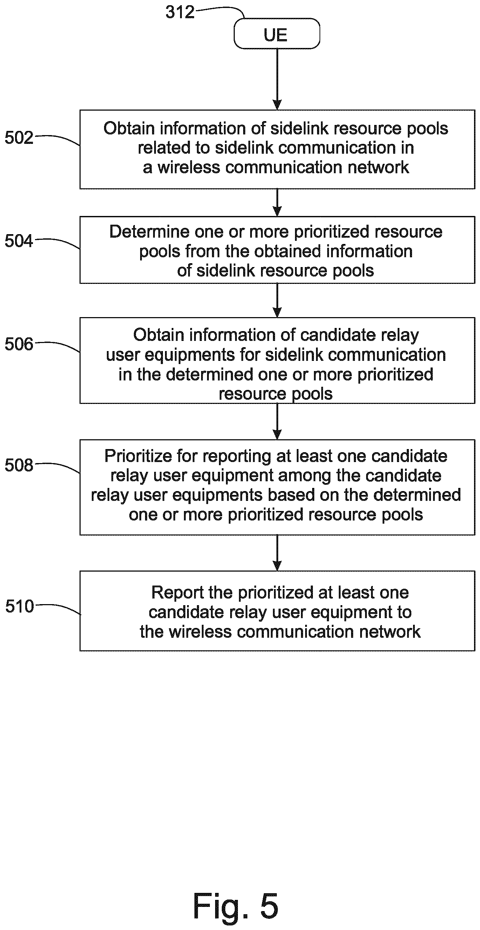

Fig. 5 depicts a flow diagram of a method, in accordance with the claimed invention. The user equipment 312 obtains 502 information of sidelink resource pools related to sidelink communication in a wireless communication network NW. Then, the user equipment 312 determines 504 based on the obtained information of sidelink resource pools which one or more resource pools among the configured sidelink resource pools can be classified as prioritized resource pools for reporting to the network. The user equipment 312 also obtains 506 information of candidate relay user equipments for sidelink communication. The user equipment 312 then prioritizes 508 for which candidate relay user equipment(s) the remote user equipment 312 shall report corresponding measurements. The priorization is based on the determined one or more prioritized resource pools. The remote user equipment 312 sends 510 measurement reports regarding the selected at least one candidate relay user equipment to the wireless communication network NW.

Fig. 2 illustrates an example of a communication setup in which some embodiments may be implemented. There is a base station 200 which may operate as an access point to a communication network 202 by user devices 204, 206, 208. The user devices 204, 206, 208 have wireless communication capability with other user devices and/or the base station. In the setup of Fig. 2 one user device 204 is acting as a relay between some other user devices 206, 208 and the base station 200, for example. However, some of the user devices 204, 206, 208 may also be able to have a direct, mutual communication connection without any relaying user device or the base station. In the example of Fig. 2 the second user device 206 and the third user device 208 are communicating with each other whereas the first user device 204 is communicating with the base station 200, the second user device 206 and the third user device 208.

User devices having direct connection with each other may use a sidelink connection 210, for example.

In the illustration of Fig. 2, the user device 204 is communicating with the base station 200 by using both a downlink (DL) and uplink (UL) whereas the user device 206 is communicating with the base station 200 by using only the downlink (DL) i.e. is only receiving signals from the base station 200 and communicates with two other user devices 204, 208 via the sidelink. The user device 208 is communicating with the user devices 204 and 206 via the sidelink only, but the user device 204 which is able to communicate with the base station 200 may forward messages from the other user devices 206, 208 to the base station 200 and may forward messages from the base station 200 to the other user devices 206, 208. Thus, the user device 204 operates as a relay UE for the other user device(s) 206, 208 and the base station 200.

It may also be possible that a user device is able to receive signals from a base station, but signals transmitted by that user device may not be received by the base station. This may be due to higher transmission power available by the base station than the transmission power of the user device. In this kind of situation, the user device may receive e.g. control information from the base station (via downlink, DL) and transmit replies and data to a relaying user device utilizing sidelink communication with the relaying user device, for example.

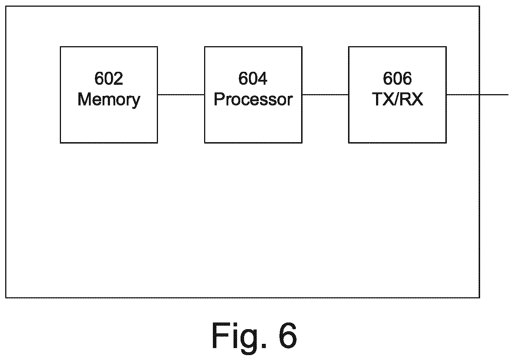

Fig. 6 illustrates an example of an apparatus in accordance with at least some embodiments of the present invention. The apparatus may be a radio device, for example a user radio device. The apparatus may perform one or more functionalities according to examples described herein.

The apparatus comprises a processor 602 and a transceiver 604. The processor is operatively connected to the transceiver for controlling the transceiver. The apparatus may comprise a memory 606. The memory may be operatively connected to the processor. It should be appreciated that the memory may be a separate memory or included to the processor and/or the transceiver.

According to an embodiment, the processor is configured to control the transceiver to perform one or more functionalities described according to an embodiment.

A memory may be a computer readable medium that may be non-transitory. The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs) and processors based on multi-core processor architecture, as non-limiting examples.

Embodiments may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialized circuits such as field programmable gate arrays FPGA, application specify circuits ASIC, signal processing devices and other devices. References to computer readable program code means, computer program, computer instructions, computer code etc. should be understood to express software for a programmable processor firmware such as the programmable content of a hardware device as instructions for a processor or configured or configuration settings for a fixed function device, gate array, programmable logic device, etc.

Although the above examples describe embodiments of the invention operating within a user radio device, UE, radio access device or a gNB, it would be appreciated that the invention as described above may be implemented as a part of any apparatus comprising a circuitry in which radio frequency signals are transmitted and/or received. Thus, for example, embodiments of the invention may be implemented in a mobile phone, in a base station, in a radio station, in a user radio device, in a computer such as a desktop computer or a tablet computer comprising radio frequency communication means (e.g. wireless local area network, cellular radio, etc.).

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analogue and/or digital circuitry) and
(b) combinations of hardware circuits and software, such as (as applicable):
   (i) a combination of analogue and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with an embodiment there is provided an apparatus comprising at least one processor; and at least one memory including computer program code; the at least one memory and the computer program code configured to, with the at least one processor, to cause the apparatus to
obtain information of sidelink resource pools related to sidelink communication in a wireless communication network;
determine one or more prioritized resource pools from the obtained information of sidelink resource pools;
obtain information of candidate relay user equipments for sidelink communication in the determined one or more prioritized resource pools;
select at least one candidate relay user equipment for reporting among the candidate relay user equipments based on the determined one or more prioritized resource pools; and
report the obtained information from the selected at least one candidate relay user equipment to the wireless communication network.

According to an embodiment, said at least one memory includes computer program code configured to, with the at least one processor, to cause the apparatus to receive from the wireless communication network information of a selected relay user equipment among the prioritized and reported at least one candidate relay user equipment to be used by the user equipment in the sidelink communication.

According to an embodiment, said at least one memory includes computer program code configured to, with the at least one processor, to cause the apparatus to receive discovery messages over the one or more prioritized resource pools; and to select the candidate relay user equipment to be reported based on discovery messages received over the one or more prioritized resource pools.

According to an embodiment, said at least one memory includes computer program code configured to, with the at least one processor, to cause the apparatus to receive discovery messages over one or more non-prioritized resource pools; and to determine whether to also report the candidate relay user equipment from which discovery messages are received over the one or more non-prioritized resource pools.

According to an embodiment, said at least one memory includes computer program code configured to, with the at least one processor, to cause the apparatus to obtain information of sidelink resource pools dedicated to the apparatus.

According to an embodiment, said at least one memory includes computer program code configured to, with the at least one processor, to cause the apparatus to determine the prioritized resource pools based on the sidelink resource pool configuration dedicated to the apparatus.

According to an embodiment the sidelink resource pool configuration comprises at least one sidelink transmission resource pool, wherein said at least one memory includes computer program code configured to, with the at least one processor, to cause the apparatus to determine at least one sidelink transmission resource pool as a high-priority resource pool.

According to an embodiment the sidelink resource pool configuration comprising a plurality of sidelink reception resource pools, wherein said at least one memory includes computer program code configured to, with the at least one processor, to cause the apparatus to determine one or more prioritized resource pools among the plurality of sidelink reception resource pools.

According to an embodiment, said at least one memory includes computer program code configured to, with the at least one processor, to cause the apparatus to monitor discovery messages from all configured sidelink reception resource pools including the determined prioritized resource pools; or to monitor discovery messages only from the determined prioritized resource pools.

According to an embodiment, said at least one memory includes computer program code configured to, with the at least one processor, to cause the apparatus to use a tag to differentiate the prioritized candidate relay user equipments from the other discovered non-prioritized candidate relay user equipments; and to report the tag with the obtained information from the selected at least one candidate relay user equipment.

According to an embodiment, said at least one memory includes computer program code configured to, with the at least one processor, to cause the apparatus to add a priority value for the prioritized candidate relay user equipments; and to report the priority value with the obtained information from the selected at least one candidate relay user equipment.

According to an embodiment, said at least one memory includes computer program code configured to, with the at least one processor, to cause the apparatus to use a tag to differentiate the prioritized candidate relay user equipments from the other discovered and measured non-prioritized candidate relay user equipments; add a priority value with the tag; and to report the tag with the obtained information from the selected at least one candidate relay user equipment, wherein the tag indicates a corresponding priority value.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

In the following, a list of abbreviations is provided:
- AS: access stratum
- IE: information element
- NW:: Network
- PLMN:: Public Land Mobile Network
- RP:: Resource Pool
- RRC:: Radio Resource Control
- RSRP:: Reference Signal Received Power
- RX: receiver/reception
- SI: study item
- SIB: system information block
- SL:: SideLink
- TX: transmitter/transmission
- U2U:: UE to UE
- UE:: User Equipment
- WI: work item

## Claims

1. An apparatus (206), comprising means (606) for:
obtaining information of sidelink resource pools related to sidelink communication in a wireless communication network (202);
**characterized in that** the apparatus (206) further comprises means for:
using the obtained information of sidelink resource pools to determine one or more prioritized resource pools;
obtaining information of candidate relay user equipments (204, 208) for sidelink communication from the determined one or more prioritized resource pools;
prioritizing for reporting at least one candidate relay user equipment (204, 208) among the candidate relay user equipments (204, 208) based on the determined one or more prioritized resource pools; and
reporting at least one, but not all of the prioritized at least one candidate relay user equipment (204, 208) to the wireless communication network (202).

2. The apparatus (206) according to claim 1 further comprising means for:
receiving from the wireless communication network (202) information of a selected relay user equipment (204) among the prioritized and reported at least one candidate relay user equipment (204, 208) to be used by the user equipment in the sidelink communication.

3. The apparatus (206) according to claim 1 or 2, wherein:
said means for obtaining information of candidate relay user equipments (204, 208) comprise means for receiving discovery messages over the one or more prioritized resource pools; and
said means for reporting at least one candidate relay user equipment are configured to select the candidate relay user equipment (204, 208) to be reported based on discovery messages received over the one or more prioritized resource pools.

4. The apparatus (206) according to claim 3, wherein:
said means for obtaining information of candidate relay user equipments (204, 208) further comprise means for receiving discovery messages over one or more non-prioritized resource pools; and
said means for reporting at least one candidate relay user equipment (204, 208) are further configured to determine whether to also report the candidate relay user equipment (204, 208) from which discovery messages are received over the one or more non-prioritized resource pools.

5. The apparatus (206) according to any of the claims 1 to 4 further comprising means for:
determining the prioritized resource pools based on a sidelink resource pool configuration dedicated to the apparatus (206).

6. The apparatus (206) according to claim 5, wherein the sidelink resource pool configuration comprising at least one sidelink transmission resource pool, wherein the apparatus (206) further comprises means for:
determining at least one configured sidelink transmission resource pool as a high-priority resource pool.

7. The apparatus (206) according to claim 5 or 6, wherein the sidelink resource pool configuration comprises a tag to differentiate the prioritized candidate relay user equipments (204, 208) from other discovered candidate relay user equipments (204, 208), wherein
the means for prioritizing for reporting are configured to use the tag to determine the priority.

8. The apparatus (206) according to any of the claims 5 to 7, wherein the means for prioritizing for reporting are configured to:
determine whether the sidelink resource pool configuration comprises certain features, and
determine the priority based on existence or lack of the certain features in the sidelink resource pool configuration.

9. The apparatus (206) according to any of the claims 1 to 8, wherein the sidelink resource pool configuration comprising a plurality of sidelink reception resource pools, wherein the apparatus (206) further comprises means for:
determining among the plurality of sidelink reception resource pools one or more prioritized resource pools.

10. The apparatus (206) according to claim 9 further comprises at least one of means for:
monitoring discovery messages from all configured sidelink reception resource pools including the determined prioritized resource pools; or
monitoring discovery messages only from the determined prioritized resource pools.

11. The apparatus (206) according to claim 10, wherein the apparatus (206) is configured to activate and/or de-activate monitoring of all configured resource pools or only prioritized resource pools based on an estimated or detected number of candidate relay user equipment (204, 208) in the proximity of the apparatus (206).

12. The apparatus (206) according to any of the claims 1 to 11 further comprising means for:
using a tag to differentiate the prioritized candidate relay user equipments (204, 208) from the other discovered non-prioritized candidate relay user equipments (204, 208);
wherein the means for reporting are configured to report the tag.

13. The apparatus (206) according to any of the claims 1 to 12 further comprising means for:
adding a priority value for the prioritized candidate relay user equipments (204, 208);
wherein the means for reporting are configured to report the priority value.

14. The apparatus (206) according to any of the claims 1 to 11 further comprising means for:
using a tag to differentiate the prioritized candidate relay user equipments (204, 208) from the other discovered non-prioritized candidate relay user equipments (204, 208);
adding a priority value with the tag;
wherein the means for reporting are configured to report the tag, wherein the tag indicates a corresponding priority value.

15. The apparatus (206) according to any of the claims 1 to 14, wherein the means for determining one or more prioritized resource pools are configured to determine the priority based on one of the following:
radio resource control state of a candidate user equipment (204, 208);
a serving cell of the candidate relay user equipment (204, 208);
a public land mobile network the candidate relay user equipment (204, 208) is communicating with.

16. The apparatus (206) according to any of the claims 1 to 14, wherein the means for determining one or more prioritized resource pools are configured to determine the priority based on whether one or more of the following criteria is taken into account or not:
radio resource control state of a candidate user equipment (204, 208);
a serving cell of the candidate relay user equipment (204, 208);
a public land mobile network the candidate relay user equipment (204, 208) is communicating with.

17. The apparatus (206) according to claim 11, wherein the detected number of candidate relay user equipment (204, 208) in the proximity of the apparatus is based on historical information related with a relay discovery procedure.

18. A method, comprising:
obtaining by a user equipment (206) information of sidelink resource pools related to sidelink communication in a wireless communication network (202);
**characterized in that** the method further comprises:
using the obtained information of sidelink resource pools to determine one or more prioritized resource pools;
obtaining information of candidate relay user equipments (204, 208) for sidelink communication from the determined one or more prioritized resource pools;
prioritizing for reporting at least one candidate relay user equipment (204, 208) among the candidate relay user equipments (204, 208) based on the determined one or more prioritized resource pools; and
reporting at least one, but not all of the prioritized at least one candidate relay user equipment (204, 208) to the wireless communication network (202).

19. The method according to claim 18, comprising:
receiving from the wireless communication network (202) information of a selected relay user equipment (204) among the prioritized and reported at least one candidate relay user equipment (204, 208) to be used by the user equipment (206) in the sidelink communication.

20. An apparatus (206) according to claim 1, wherein said means comprising at least one processor (604); and at least one memory (602) including computer program code; the at least one memory (602) and the computer program code configured to, with the at least one processor (604), to cause the apparatus (206) to:
obtain information of sidelink resource pools related to sidelink communication in a wireless communication network (202);
**characterized in that** the computer program code is further configured to, with the at least one processor, to cause the apparatus to:
use the obtained information of sidelink resource pools to determine one or more prioritized resource pools;
obtain information of candidate relay user equipments (204, 208) for sidelink communication from the determined one or more prioritized resource pools;
prioritize for reporting at least one candidate relay user equipment (204, 208) among the candidate relay user equipments (204, 208) based on the determined one or more prioritized resource pools; and
report at least one, but not all of the prioritized at least one candidate relay user equipment (204, 208) to the wireless communication network (202).

## Patentansprüche

1. Vorrichtung (206), die Mittel (606) für Folgendes umfasst:
Erhalten von Informationen über Sidelinkressourcenpools, die sich auf eine Sidelinkkommunikation in einem drahtlosen Kommunikationsnetzwerk (202) beziehen;
**dadurch gekennzeichnet, dass** die Vorrichtung (206) ferner Mittel für Folgendes umfasst:
Verwenden der erhaltenen Informationen über Sidelinkressourcenpools, um einen oder mehrere priorisierte Ressourcenpools zu bestimmen;
Erhalten von Informationen über Weiterleitungsteilnehmereinrichtungskandidaten (204, 208) für eine Sidelinkkommunikation aus dem einen oder den mehreren bestimmten priorisierten Ressourcenpools;
Priorisieren von mindestens einem Weiterleitungsteilnehmereinrichtungskandidaten (204, 208) von den Weiterleitungsteilnehmereinrichtungskandidaten (204, 208) zum Melden auf Basis des einen oder der mehreren bestimmten priorisierten Ressourcenpools; und
Melden von mindestens einem, aber nicht allen der priorisierten mindestens einen Weiterleitungsteilnehmereinrichtungskandidaten (204, 208) beim drahtlosen Kommunikationsnetzwerk (202).

2. Vorrichtung (206) nach Anspruch 1, die ferner Mittel für Folgendes umfasst:
Empfangen von Informationen über eine ausgewählte Weiterleitungsteilnehmereinrichtung (204) des priorisierten und gemeldeten mindestens einen Weiterleitungsteilnehmereinrichtungskandidaten (204, 208), die durch die Teilnehmereinrichtung in der Sidelinkkommunikation zu verwenden ist, vom drahtlosen Kommunikationsnetzwerk (202).

3. Vorrichtung (206) nach Anspruch 1 oder 2, wobei:
die Mittel zum Erhalten von Informationen über Weiterleitungsteilnehmereinrichtungskandidaten (204, 208) Mittel zum Empfangen von Entdeckungsnachrichten über den einen oder die mehreren priorisierten Ressourcenpools umfassen; und
die Mittel zum Melden von mindestens einem Weiterleitungsteilnehmereinrichtungskandidaten dazu ausgelegt sind, den Weiterleitungsteilnehmereinrichtungskandidaten (204, 208) auszuwählen, der auf Basis von Entdeckungsnachrichten zu melden ist, die über den einen oder die mehreren priorisierten Ressourcenpools empfangen werden.

4. Vorrichtung (206) nach Anspruch 3, wobei:
die Mittel zum Erhalten von Informationen über Weiterleitungsteilnehmereinrichtungskandidaten (204, 208) ferner Mittel zum Empfangen von Entdeckungsnachrichten über einen oder mehrere nicht priorisierte Ressourcenpools umfassen; und
die Mittel zum Melden von mindestens einem Weiterleitungsteilnehmereinrichtungskandidaten (204, 208) ferner dazu ausgelegt sind zu bestimmen, ob auch der Weiterleitungsteilnehmereinrichtungskandidat (204, 208) zu melden ist, von dem Entdeckungsnachrichten über den einen oder die mehreren nicht priorisierten Ressourcenpools empfangen werden.

5. Vorrichtung (206) nach einem der Ansprüche 1 bis 4, die ferner Mittel für Folgendes umfasst:
Bestimmen der priorisierten Ressourcenpools auf Basis einer für die Vorrichtung (206) dedizierte Sidelinkressourcenpoolauslegung.

6. Vorrichtung (206) nach Anspruch 5, wobei die Sidelinkressourcenpoolauslegung mindestens einen Sidelinkübertragungsressourcenpool umfasst, wobei die Vorrichtung (206) ferner Mittel für Folgendes umfasst:
Bestimmen von mindestens einem ausgelegten Sidelinkübertragungsressourcenpool als einen Ressourcenpool hoher Priorität.

7. Vorrichtung (206) nach Anspruch 5 oder 6, wobei die Sidelinkressourcenpoolauslegung ein Tag umfasst, um die priorisierten Weiterleitungsteilnehmereinrichtungskandidaten (204, 208) von anderen entdeckten Weiterleitungsteilnehmereinrichtungskandidaten (204, 208) zu unterscheiden, wobei
die Mittel zum Priorisieren zum Melden dazu ausgelegt sind, das Tag zu verwenden, um die Priorität zu bestimmen.

8. Vorrichtung (206) nach einem der Ansprüche 5 bis 7, wobei die Mittel zum Priorisieren zum Melden zu Folgendem ausgelegt sind:
Bestimmen, ob die Sidelinkressourcenpoolauslegung gewisse Merkmale umfasst, und
Bestimmen der Priorität auf Basis eines Vorhandenseins oder eines Fehlens der gewissen Merkmale in der Sidelinkressourcenpoolauslegung.

9. Vorrichtung (206) nach einem der Ansprüche 1 bis 8, wobei die Sidelinkressourcenpoolauslegung eine Vielzahl von Sidelinkempfangsressourcenpools umfasst, wobei die Vorrichtung (206) ferner Mittel für Folgendes umfasst:
Bestimmen von einem oder mehreren priorisierten Ressourcenpools unter der Vielzahl von Sidelinkempfangsressourcenpools.

10. Vorrichtung (206) nach Anspruch 9, die ferner mindestens eines von Mitteln für Folgendes umfasst:
Überwachen von Entdeckungsnachrichten von allen ausgelegten Sidelinkempfangsressourcenpools, die die bestimmten priorisierten Ressourcenpools beinhalten; oder
Überwachen von Entdeckungsnachrichten nur von den bestimmten priorisierten Ressourcenpools.

11. Vorrichtung (206) nach Anspruch 10, wobei die Vorrichtung (206) dazu ausgelegt ist, dass Überwachen von allen ausgelegten Ressourcenpools oder nur von priorisierten Ressourcenpools auf Basis einer geschätzten oder detektierten Anzahl von Weiterleitungsteilnehmereinrichtungskandidaten (204, 208) in der Nähe der Vorrichtung (206) zu aktivieren und/oder zu deaktivieren.

12. Vorrichtung (206) nach einem der Ansprüche 1 bis 11, die ferner Mittel für Folgendes umfasst:
Verwenden eines Tags, um die priorisierten Weiterleitungsteilnehmereinrichtungskandidaten (204, 208) von den anderen entdeckten nicht priorisierten Weiterleitungsteilnehmereinrichtungskandidaten (204, 208) zu unterscheiden;
wobei die Mittel zum Melden dazu ausgelegt sind, das Tag zu melden.

13. Vorrichtung (206) nach einem der Ansprüche 1 bis 12, die ferner Mittel für Folgendes umfasst:
Hinzufügen eines Prioritätswertes für die priorisierten Weiterleitungsteilnehmereinrichtungskandidaten (204, 208);
wobei die Mittel zum Melden dazu ausgelegt sind, den Prioritätswert zu melden.

14. Vorrichtung (206) nach einem der Ansprüche 1 bis 11, die ferner Mittel für Folgendes umfasst:
Verwenden eines Tags, um die priorisierten Weiterleitungsteilnehmereinrichtungskandidaten (204, 208) von den anderen entdeckten nicht priorisierten Weiterleitungsteilnehmereinrichtungskandidaten (204, 208) zu unterscheiden;
Hinzufügen eines Prioritätswertes mit dem Tag;
wobei die Mittel zum Melden dazu ausgelegt sind, das Tag zu melden, wobei das Tag einen entsprechenden Prioritätswert anzeigt.

15. Vorrichtung (206) nach einem der Ansprüche 1 bis 14, wobei die Mittel zum Bestimmen von einem oder mehreren priorisierten Ressourcenpools dazu ausgelegt sind, die Priorität auf Basis von einem von Folgendem zu bestimmen:
einem Funkressourcensteuerstatus eines Teilnehmereinrichtungskandidaten (204, 208);
einer bedienenden Zelle des Weiterleitungsteilnehmereinrichtungskandidaten (204, 208);
einem öffentlichen terrestrischen Mobilfunknetzwerk, mit dem der Weiterleitungsteilnehmereinrichtungskandidaten (204, 208) kommuniziert.

16. Vorrichtung (206) nach einem der Ansprüche 1 bis 14, wobei die Mittel zum Bestimmen von einem oder mehreren priorisierten Ressourcenpools dazu ausgelegt sind, die Priorität darauf basierend zu bestimmen, ob eines oder mehrere der folgenden Kriterien berücksichtigt wird oder nicht:
ein Funkressourcensteuerstatus eines Teilnehmereinrichtungskandidaten (204, 208);
eine bedienende Zelle des Weiterleitungsteilnehmereinrichtungskandidaten (204, 208);
ein öffentliches terrestrisches Mobilfunknetzwerk, mit dem der Weiterleitungsteilnehmereinrichtungskandidaten (204, 208) kommuniziert.

17. Vorrichtung (206) nach Anspruch 11, wobei die detektierte Anzahl von Weiterleitungsteilnehmereinrichtungskandidaten (204, 208) in der Nähe der Vorrichtung auf historischen Informationen basiert, die sich auf eine Weiterleitungsentdeckungsprozedur beziehen.

18. Verfahren, das Folgendes umfasst:
Erhalten von Informationen über Sidelinkressourcenpools, die sich auf eine Sidelinkkommunikation in einem drahtlosen Kommunikationsnetzwerk (202) beziehen, durch eine Teilnehmereinrichtung (206);
**dadurch gekennzeichnet, dass** das Verfahren ferner Folgendes umfasst:
Verwenden der erhaltenen Informationen über Sidelinkressourcenpools, um einen oder mehrere priorisierte Ressourcenpools zu bestimmen;
Erhalten von Informationen über Weiterleitungsteilnehmereinrichtungskandidaten (204, 208) für eine Sidelinkkommunikation aus dem einen oder den mehreren bestimmten priorisierten Ressourcenpools;
Priorisieren von mindestens einem Weiterleitungsteilnehmereinrichtungskandidaten (204, 208) von den Weiterleitungsteilnehmereinrichtungskandidaten (204, 208) zum Melden auf Basis des einen oder der mehreren bestimmten priorisierten Ressourcenpools; und
Melden von mindestens einem, aber nicht allen der priorisierten mindestens einen Weiterleitungsteilnehmereinrichtungskandidaten (204, 208) beim drahtlosen Kommunikationsnetzwerk (202).

19. Verfahren nach Anspruch 18, das Folgendes umfasst:
Empfangen von Informationen über eine ausgewählte Weiterleitungsteilnehmereinrichtung (204) des priorisierten und gemeldeten mindestens einen Weiterleitungsteilnehmereinrichtungskandidaten (204, 208), die durch die Teilnehmereinrichtung (206) in der Sidelinkkommunikation zu verwenden ist, vom drahtlosen Kommunikationsnetzwerk (202).

20. Vorrichtung (206) nach Anspruch 1, wobei die Mittel mindestens einen Prozessor (604); und mindestens einen Speicher (602) umfassen, in dem Computerprogrammcode beinhaltet ist; wobei der mindestens eine Speicher (602) und der Computerprogrammcode dazu ausgelegt sind, die Vorrichtung (206) mit dem mindestens einen Prozessor (604) zu Folgendem zu veranlassen:
Erhalten von Informationen über Sidelinkressourcenpools, die sich auf eine Sidelinkkommunikation in einem drahtlosen Kommunikationsnetzwerk (202) beziehen;
**dadurch gekennzeichnet, dass** der Computerprogrammcode ferner dazu ausgelegt ist, die Vorrichtung mit dem mindestens einen Prozessor zu Folgendem zu veranlassen:
Verwenden der erhaltenen Informationen über Sidelinkressourcenpools, um einen oder mehrere priorisierte Ressourcenpools zu bestimmen;
Erhalten von Informationen über Weiterleitungsteilnehmereinrichtungskandidaten (204, 208) für eine Sidelinkkommunikation aus dem einen oder den mehreren bestimmten priorisierten Ressourcenpools;
Priorisieren von mindestens einem Weiterleitungsteilnehmereinrichtungskandidaten (204, 208) von den Weiterleitungsteilnehmereinrichtungskandidaten (204, 208) zum Melden auf Basis des einen oder der mehreren bestimmten priorisierten Ressourcenpools; und
Melden von mindestens einem, aber nicht allen der priorisierten mindestens einen Weiterleitungsteilnehmereinrichtungskandidaten (204, 208) beim drahtlosen Kommunikationsnetzwerk (202).

## Revendications

1. Appareil (206), comprenant des moyens (606) pour :
obtenir des informations de réserves de ressources de liaison latérale liées à une communication de liaison latérale dans un réseau de communication sans fil (202) ;
**caractérisé en ce que** l'appareil (206) comprend en outre des moyens pour :
utiliser les informations de réserves de ressources de liaison latérale obtenues pour déterminer une ou plusieurs réserves de ressources prioritaires ;
obtenir des informations d'équipements utilisateurs relais candidats (204, 208) pour une communication de liaison latérale à partir des une ou plusieurs réserves de ressources prioritaires déterminées ;
donner la priorité au signalement d'au moins un équipement utilisateur relais candidat (204, 208) parmi les équipements utilisateurs relais candidats (204, 208) sur la base des une ou plusieurs réserves de ressources prioritaires déterminées ; et
signaler au réseau de communication sans fil (202) au moins un, mais pas tous des au moins un équipement utilisateur relais candidat (204, 208) prioritaire.

2. Appareil (206) selon la revendication 1, comprenant en outre des moyens pour :
recevoir du réseau de communication sans fil (202) des informations d'un équipement utilisateur relais (204) sélectionné parmi le au moins un équipement utilisateur relais candidat (204, 208) prioritaire et signalé à utiliser par l'équipement utilisateur dans la communication de liaison latérale.

3. Appareil (206) selon la revendication 1 ou 2, dans lequel :
lesdits moyens pour obtenir des informations d'équipements utilisateurs relais candidats (204, 208) comprennent des moyens pour recevoir des messages de découverte sur les une ou plusieurs réserves de ressources prioritaires ; et
lesdits moyens pour signaler au moins un équipement utilisateur relais candidat sont configurés pour sélectionner l'équipement utilisateur relais candidat (204, 208) à signaler sur la base des messages de découverte reçus sur les une ou plusieurs réserves de ressources prioritaires.

4. Appareil (206) selon la revendication 3, dans lequel :
lesdits moyens pour obtenir des informations d'équipements utilisateurs relais candidats (204, 208) comprennent en outre des moyens pour recevoir des messages de découverte sur une ou plusieurs réserves de ressources non prioritaires ; et
lesdits moyens pour signaler au moins un équipement utilisateur relais candidat (204, 208) sont en outre configurés pour déterminer s'il faut également signaler l'équipement utilisateur relais candidat (204, 208) en provenance duquel des messages de découverte sont reçus sur les une ou plusieurs réserves de ressources non prioritaires.

5. Appareil (206) selon l'une des revendications 1 à 4, comprenant en outre des moyens pour :
déterminer les réserves de ressources prioritaires sur la base d'une configuration de réserve de ressources de liaison latérale dédiée à l'appareil (206).

6. Appareil (206) selon la revendication 5, dans lequel la configuration de réserve de ressources de liaison latérale comprend au moins une réserve de ressource de transmission de liaison latérale, dans lequel l'appareil (206) comprend en outre des moyens pour :
déterminer au moins une réserve de ressource de transmission de liaison latérale configurée en tant que réserve de ressource à haute priorité.

7. Appareil (206) selon la revendication 5 ou 6, dans lequel la configuration de réserve de ressources de liaison latérale comprend une étiquette pour différencier les équipements utilisateurs relais candidats (204, 208) prioritaires des autres équipements utilisateurs relais candidats (204, 208) découverts, dans lequel
les moyens pour donner la priorité au signalement sont configurés pour utiliser l'étiquette pour déterminer la priorité.

8. Appareil (206) selon l'une des revendications 5 à 7, dans lequel les moyens pour donner la priorité au signalement sont configurés pour :
déterminer si la configuration de réserve de ressources de liaison latérale comprend certaines caractéristiques, et
déterminer la priorité sur la base de l'existence ou de l'absence de certaines caractéristiques dans la configuration de réserve de ressources de liaison latérale.

9. Appareil (206) selon l'une des revendications 1 à 8, dans lequel la configuration de réserve de ressources de liaison latérale comprend une pluralité de réserves de ressources de réception de liaison latérale, dans lequel l'appareil (206) comprend en outre des moyens pour :
déterminer parmi la pluralité de réserves de ressources de réception de liaison latérale une ou plusieurs réserves de ressources prioritaires.

10. Appareil (206) selon la revendication 9, comprenant en outre au moins un des moyens pour :
surveiller des messages de découverte provenant de toutes les réserves de ressources de réception de liaison latérale configurées comportant les réserves de ressources prioritaires déterminées ; ou
surveiller des messages de découverte provenant uniquement des réserves de ressources prioritaires déterminées.

11. Appareil (206) selon la revendication 10, dans lequel l'appareil (206) est configuré pour activer et/ou désactiver la surveillance de toutes les réserves de ressources configurées ou seulement des réserves de ressources prioritaires sur la base d'un nombre estimé ou détecté d'équipements utilisateurs relais candidats (204, 208) à proximité de l'appareil (206).

12. Appareil (206) selon l'une des revendications 1 à 11, comprenant en outre des moyens pour :
utiliser une étiquette pour différencier les équipements utilisateurs relais candidats (204, 208) prioritaires des autres équipements utilisateurs relais candidats (204, 208) non prioritaires découverts ;
dans lequel les moyens de signalement sont configurés pour signaler l'étiquette.

13. Appareil (206) selon l'une des revendications 1 à 12, comprenant en outre des moyens pour :
ajouter une valeur de priorité des équipements utilisateurs relais candidats (204, 208) prioritaires ;
dans lequel les moyens de signalement sont configurés pour signaler la valeur de priorité.

14. Appareil (206) selon l'une des revendications 1 à 11, comprenant en outre des moyens pour :
utiliser une étiquette pour différencier les équipements utilisateurs relais candidats (204, 208) prioritaires des autres équipements utilisateurs relais candidats (204, 208) non prioritaires découverts ;
ajouter une valeur de priorité à l'étiquette ;
dans lequel les moyens de signalement sont configurés pour signaler l'étiquette, dans lequel l'étiquette indique une valeur de priorité correspondante.

15. Appareil (206) selon l'une des revendications 1 à 14, dans lequel les moyens pour déterminer une ou plusieurs réserves de ressources prioritaires sont configurés pour déterminer la priorité sur la base de l'un des éléments suivants :
un état de contrôle de ressources radio d'un équipement utilisateur candidat (204, 208) ;
une cellule de desserte de l'équipement utilisateur relais candidat (204, 208) ;
un réseau mobile terrestre public avec lequel communique l'équipement utilisateur relais candidat (204, 208).

16. Appareil (206) selon l'une des revendications 1 à 14, dans lequel les moyens pour déterminer une ou plusieurs réserves de ressources prioritaires sont configurés pour déterminer la priorité selon qu'un ou plusieurs des critères suivants est pris en compte ou non :
un état de contrôle de ressources radio d'un équipement utilisateur candidat (204, 208) ;
une cellule de desserte de l'équipement utilisateur relais candidat (204, 208) ;
un réseau mobile terrestre public avec lequel communique l'équipement utilisateur relais candidat (204, 208).

17. Appareil (206) selon la revendication 11, dans lequel le nombre détecté d'équipements utilisateurs relais candidat (204, 208) à proximité de l'appareil est basé sur des informations d'historique liées à une procédure de découverte de relais.

18. Procédé comprenant les étapes suivantes :
obtenir, par un équipement utilisateur (206), des informations de réserves de ressources de liaison latérale liées à une communication de liaison latérale dans un réseau de communication sans fil (202) ;
**caractérisé en ce que** le procédé comprend en outre les étapes suivantes :
utiliser les informations de réserves de ressources de liaison latérale obtenues pour déterminer une ou plusieurs réserves de ressources prioritaires ;
obtenir des informations d'équipements utilisateurs relais candidats (204, 208) pour une communication de liaison latérale à partir des une ou plusieurs réserves de ressources prioritaires déterminées ;
donner la priorité au signalement d'au moins un équipement utilisateur relais candidat (204, 208) parmi les équipements utilisateurs relais candidats (204, 208) sur la base des une ou plusieurs réserves de ressources prioritaires déterminées ; et
signaler au réseau de communication sans fil (202) au moins un, mais pas tous des au moins un d'équipement utilisateur relais candidat (204, 208) prioritaire.

19. Procédé selon la revendication 18, comprenant les étapes suivantes :
recevoir du réseau de communication sans fil (202) des informations d'un équipement utilisateur relais (204) sélectionné parmi le au moins un équipement utilisateur relais candidat (204, 208) prioritaire et signalé à utiliser par l'équipement utilisateur (206) dans la communication de liaison latérale.

20. Appareil (206) selon la revendication 1, dans lequel lesdits moyens comprennent au moins un processeur (604) ; et au moins une mémoire (602) comportant un code de programme informatique ; la au moins une mémoire (602) et le code de programme informatique étant configurés, avec le au moins un processeur (604), pour amener l'appareil (206) à :
obtenir des informations de réserves de ressources de liaison latérale liées à une communication de liaison latérale dans un réseau de communication sans fil (202) ;
**caractérisé en ce que** le code de programme informatique est en outre configuré pour, avec le au moins un processeur, amener l'appareil à :
utiliser les informations de réserves de ressources de liaison latérale obtenues pour déterminer une ou plusieurs réserves de ressources prioritaires ;
obtenir des informations d'équipements utilisateurs relais candidats (204, 208) pour une communication de liaison latérale à partir des une ou plusieurs réserves de ressources prioritaires déterminées ;
donner la priorité au signalement d'au moins un équipement utilisateur relais candidat (204, 208) parmi les équipements utilisateurs relais candidats (204, 208) sur la base des une ou plusieurs réserves de ressources prioritaires déterminées ; et
signaler au réseau de communication sans fil (202) au moins un, mais pas tous des au moins un équipement utilisateur relais candidat (204, 208) prioritaire.
